# EUROPÄISCHE PATENTSCHRIFT

(11) **EP 0 687 413 B1**
(45) Veröffentlichungstag und Bekanntmachung des Hinweises auf die Patenterteilung: **26.05.1999**
(21) Anmeldenummer: 95710012.6
(22) Anmeldetag: 27.04.1995
(51) Int. Cl.: A21C 11/00, A21D 6/00, A21D 13/02

(54) **Verfahren zur Herstellung von Pizzen, insbesondere von Pizzaböden**
Method of preparing pizzas, especially pizza bases
Procédé de fabrication de pizzas, en particulier les fonds de pizzas

(30) Priorität: 07.05.1994 DE 4416223
(43) Veröffentlichungstag der Anmeldung: 20.12.1995
(73) Patentinhaber: Dr. AUGUST OETKER NAHRUNGSMITTEL KG, 33617 Bielefeld (DE)
(72) Erfinder: Stövesand, Rolf, D-59302 Oelde (DE)
(74) Vertreter: Meyer, Gerd

(56) Entgegenhaltungen:
- FR-A- 2 573 628
- FR-A- 2 577 760
- FR-A- 2 642 937
- GB-A- 1 280 611
- US-A- 5 171 590

## Beschreibung

Rohteigböden können in vielfacher Weise hergestellt werden, nämlich durch Ausrollen von Teiglingen zu einer Schicht, durch Pressen eines Ballens oder Formen mittels Formwalzen und durch noch weitere andere Verfahren.

Das Pressen als einziger Schritt führt zu einer besonderen Struktur und Sensorik des Bodens, dadurch daß der Teig innerhalb kürzester Zeit sich über große Flächen ausdehnen muß, was dazu führt, daß die Klebestruktur des Bodens so beeinflußt wird, daß eine ganz besondere Struktur des Bodens erreicht wird, die man in Fachkreisen als "kurzer Biß" bezeichnet. Das heißt, es entsteht ein Boden, der kroß aber dennoch extrem wenig zäh, leicht kau- und zerteilbar ist.

Der Nachteil beim Pressen liegt darin, daß hohe Preßdrucke auf das Produkt einwirken und der gepreßte Teigling auf dem Preßgutträger fest haftet. Wenn man diesen Teigling vom Preßgutträger löst und in einen Ofen gibt, so ist das - wenn überhaupt - nur unter Zuhilfenahme von Trennmitteln möglich, die aber das Backgut in der Struktur und der Qualtität negativ beeinflussen.

Es ist bereits versucht worden, dieser negativen Seite des Pressens entgegenzuwirken. So wird in der deutschen Offenlegungschrift 4120807 ein Verfahren beschrieben, in dem ein Pizzaboden direkt auf Stein gepreßt wird und im Durchlaufverfahren durch den Ofen gefahren wird. Die Pizza wird also erst nach dem Backen vom Stein gelöst. Aber auch bei diesem Verfahren geht der Boden durch den hohen Preßdruck eine innige Verbindung mit dem Stein ein und führt zu einer Verschmutzung des Steins sowie zu Problemen beim Lösen vom Backgutträger.

Aufgabe der vorliegenden Erfindung ist es, ein Verfahren zu schaffen, bei dem sich der gepreßte Teigling vom Backgutträger leicht lösen läßt, so daß eine bisher nicht erreichte Konsisten und Qualtität erzielt wird.

Die Aufgabe der vorliegenden Erfindung wird durch den kennzeichnenden Teil des Anspruchs 1 gelöst.

Weitere Ausführungsformen ergeben sich aus den den Unteransprüchen.

Beim vorgeschlagenen Verfahren wird so vorgegangen, daß der in seiner Größe und im Gewicht vorbestimmte Teigling gepreßt wird. Er wird danach durch Einwirkung von Kälte insbesondere durch Tiefgefrieren so verfestigt, daß er sich vom Backgutträger durch übliche Maßnahmen, wie zum Beispiel Absaugung, leicht lösen läßt. Nach dem Ablösen werden dann die weiteren Bearbeitungsschritte wie Bestreuen, Belegen, Backen, Flämmen und ähnliche Maßnahmen in der üblichen Form durchgeführt. Die Vorteile der Erfindung liegen darin, daß alle weiteren Bearbeitungsschritte wie Bestreuen, Backen, Belegen, Flämmen auf vielfältigen Trägern wie zum Beispiel Netzbandöfen, Steinplatten, Stahlbändern usw. fortgesetzt werden können. Dies hat den Vorteil, daß die Böden lose auf den Backgutträgern liegen, auf denen sie gebacken werden, so daß damit eine ganz besondere, bisher nicht erreichte Konsistenz und Qualität erzielt wird.

Ein weiterer Vorteil dieser Erfindung liegt darin, daß vor dem Kühlen bzw. der Tiefkühlung der gepreßten Teigplatte auch eine Belegung möglich ist, so daß insgesamt die tiefgekühlten und schon belegten Teiglinge leicht von dem Backgutträger gelöst werden können und danach nur noch dem abschließenden Backprozeß unterzogen werden müssen.

Aus dem Vorstehenden ergibt sich, daß folgende Prozeßschritte möglich sind, um das erfindungsgemäße Verfahren durchzuführen:
1. Teigzubereitung
2. Dosieren des Teiges und Durchführung der Garre
3. Pressen
4. Kühlen bzw. Tiefkühlen und Entfernung der gekühlten bzw. tiefgekühlten Teigplatte vom Backgutträger
5. Backen

Wie schon erwähnt, kann schon vor dem Backen eine Teil- oder Ganzbelegung der Teigplatten erfolgen.

## Patentansprüche

1. Verfahren zur Herstellung einer flachen Backware durch Pressen, wobei ein vorherbestimmtes Teigvolumen durch Anwendung von Druck auf einer geeigneten Unterlage verteilt wird, dadurch gekennzeichnet, daß sich unmittelbar daran die Verfestigung der Backware durch die Anwendung von Kälte in jeglicher Form anschließt, wobei erst danach die Entfernung der Teigplatte vom Backgutträger und anschließend das Backen erfolgt.

2. Verfahren zur Herstellung einer flachen Backware nach Anspruch 1, dadurch gekennzeichnet, daß das Belegen der Backwaren nach dem Backen und vor der weiteren Endbehandlung mit einem weiteren Belag, aus zum Beispiel weiteren Backwaren oder sonstigen Lebensmitteln wie Gemüse und Fleisch- und Wurstwaren versehen wird.

3. Verfahren zur Herstellung einer flachen Backware nach Anspruch 1, dadurch gekennzeichnet, daß das Belegen des Teigbodens nach dem Kühlen aber vor dem Backen vorgenommen wird.

4. Verfahren zur Herstellung einer flachen Backware nach Anspruch 1, dadurch gekennzeichent, daß das Belegen des Teigbodens vor dem Kühlen erfolgt.

5. Verfahren zur Herstellung einer flachen Backware nach einem der vorhergehenden Ansprüche, dadurch gekennzeichnet, daß durch Kälteanwendung die eventuell vorhandenen Flüssigkeiten, wie zum Beispiel Öl oder Wasser gefrieren oder erstarren und der Backware eine derartige Konsistenz geben, die geeignet ist, die Backware auch im Rohzustand vom Träger durch Abheben, Absaugen oder mittels einer schrägangestellten Ebene in der Art eines Hobels abzulösen.

6. Verfahren nach Anspruch 5, dadurch gekennzeichnet, daß vor dem Kühlen Komponenten bereits aufgebracht werden, die einer gleichen Behandlung wie in Anspruch 5 unterzogen werden.

## Claims

1. Method of producing a flat bakery product by pressing, wherein a predetermined dough volume is spread by use of pressure on a suitable support, characterised in that the solidifying of the bakery product by the use of cold in any form directly follows thereon, wherein the removal of the dough plate from the baking stock carrier and subsequently the baking are carried out only after that.

2. Method of producing a flat bakery product according to claim 1, characterised in that the coating of the bakery products, after the baking and before the further end treatment, with a further topping of, for example, further bakery products or other foodstuffs such as vegetables and meat and sausage products is provided.

3. Method of producing a flat bakery product according to claim 1, characterised in that the coating of the dough base after cooling, but before baking, is undertaken.

4. Method of producing a flat bakery product according to claim 1, characterised in that the coating of the dough base before cooling is carried out.

5. Method of producing a flat bakery product according to one of the preceding claims, characterised in that through use of cold the possibly present liquids, such as for example oil or water, freeze or harden and give the bakery product a consistency of such a kind as to be suitable for detaching the bakery product, even in the raw state, from the carrier by lifting off, sucking away or by means of an obliquely set flat in the manner of a slice.

6. Method of producing a flat bakery product according to claim 5, characterised in that, before the cooling, components are already applied which are subject to a like treatment as in claim 5.

## Revendications

1. Procédé de fabrication d'un produit alimentaire à cuire plat par pressage, un volume préalablement déterminé de pâte étant réparti sur un support approprié en exerçant une pression,
**caractérisé** en ce que cette opération est immédiatement suivie de l'affermissement du produit à cuire en utilisant du froid sous une forme quelconque, et c'est seulement ensuite qu'on retire la plaque de pâte du support de produit à cuire, puis qu'on la cuit.

2. Procédé de fabrication d'un produit alimentaire à cuire plat selon la revendication 1, **caractérisé** en ce que le garnissage des produits à cuire est effectué après la cuisson et avant le traitement final avec une autre garniture, constituée par exemple d'autres produits à cuire ou d'autres denrées alimentaires telles que des légumes, de la viande et des charcuteries.

3. Procédé de fabrication d'un produit alimentaire à cuire plat selon la revendication 1, **caractérisé** en ce que le garnissage du fond de pâte est effectué après le refroidissement mais avant la cuisson.

4. Procédé de fabrication d'un produit alimentaire à cuire plat selon la revendication 1, **caractérisé** en ce que le garnissage du fond de pâte est effectué avant le refroidissement.

5. Procédé de fabrication d'un produit alimentaire à cuire plat selon une des revendications précédentes, **caractérisé** en ce qu'en utilisant du froid, les liquides éventuellement présents, comme par exemple de l'huile ou de l'eau, sont gelés ou solidifiés, et donnent au produit à cuire une consistance qui lui permet d'être détaché de son support même à l'état cru, par soulèvément, aspiration ou encore à l'aide d'un plan oblique du genre spatule.

6. Procédé selon la revendication 5, **caractérisé** en ce qu'on met en place dès avant le refroidissement des composants qui sont soumis à un traitement identique à celui indiqué dans la revendication 5.
